# EUROPEAN PATENT SPECIFICATION

(11) **EP 2 578 915 B1**
(45) Date of publication and mention of the grant of the patent: **23.11.2016**
(21) Application number: 12186914.3
(22) Date of filing: 02.10.2012
(51) Int. Cl.: F16L 3/12, F16L 3/18, F16L 31/00, B66F 9/08, B66F 9/20

(54) **Device and method for attaching a hydraulic hose for an industrial truck**
Vorrichtung und Verfahren zur Befestigung eines hydraulischen Rohres eines Flurförderzeuges
Dispositif et méthode de fixation d'un tuyau hydraulique pour un chariot de manutention

(30) Priority: 04.10.2011 SE 1150916; 03.04.2012 SE 1250338
(43) Date of publication of application: 10.04.2013
(73) Proprietor: Toyota Material Handling Manufacturing Sweden AB, 595 81 Mjölby (SE)
(72) Inventor: Pap, Angela, 573 41 Tranås (SE)
(74) Representative: Zacco Sweden AB

(56) References cited:
- WO-A1-2010/005371
- US-A- 1 354 480
- US-A- 4 553 638
- US-A- 4 792 109

## Description

The invention refers to the area of industrial trucks with lift masts that includes hydraulic hoses. Hydraulic hoses are designed to be able to withstand high pressures preferably from 20 bar and up. A hydraulic hose is thus stiff and has a thick armoured hose wall.

### PRIOR ART

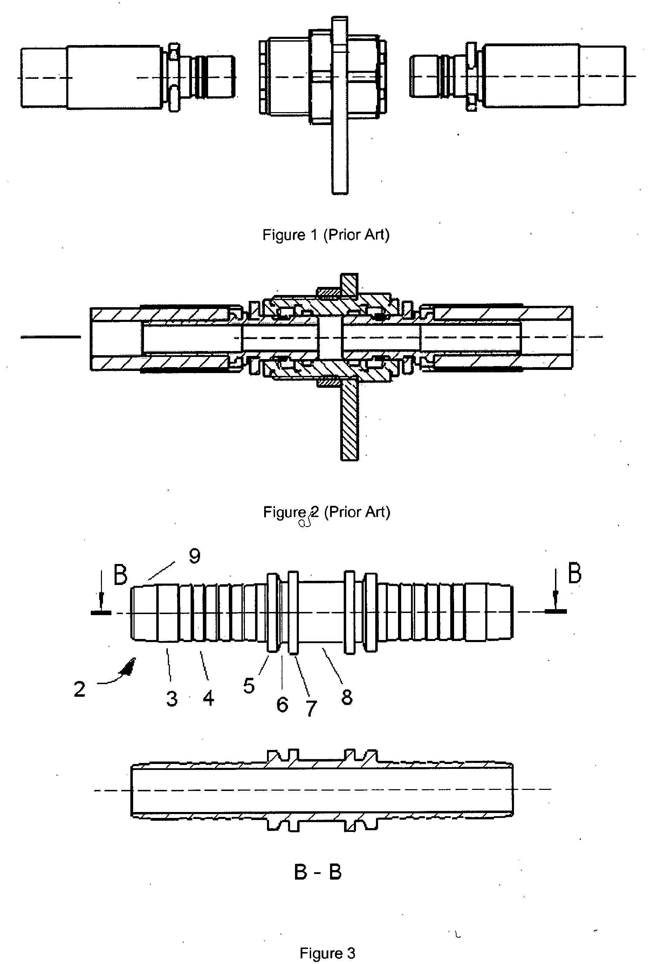

In industrial trucks' lift masts hydraulic hoses are generally attached with pretension over rolls or wheels. This is done in order to be able to follow the lift forks motions and also the masts motions during movement of the forks, primarily in vertical direction. The prior art for attachment of hydraulic hoses in lift masts with industrial trucks involves an attachment arrangement where two hydraulic hoses are coupled together in the attachment point with two WEO-couplings, which can be studied in Fig. 1 and Fig. 2. This means that a first hydraulic hose provided with such a coupling can click into a middle element and a second hydraulic hose can click into a middle element and that a second hydraulic hose can be attached to the same middle element with a second WEO-coupling. The middle element has a protruding part which is welded or screwed to the truck mast, which generally is made at a bulkhead passage in the mast. When unfastening the hydraulic hose the WEO-couplings are disconnected respectively, from the attached middle element, wherein two hydraulic hose ends on two hydraulic hose pieces are established.

The problem in the prior art is that it is relatively complicated with many comprised details. Design performed in this way has been done because hydraulic hoses are relatively stiff due to their armour and wall thickness. Hydraulic hoses are exposed to high pressure differences internally and can therefore move in use. If a hydraulic hose comes lose in a lift mast it can give rise to hydraulic hose rupture at clamping in the mast, or even worse if a loop of a hydraulic hose hooks into an outer object, primarily with a raised load, the stability of the industrial truck can be jeopardised. Thus it has been considered important to attach them in a manner that immobilises them, in themselves, at the attachment point. Thus more simple attachments have been excluded. The prior art above also discloses the problem that there are two attachment points in the coupling where leakage easily occurs.

### SHORT DESCRIPTION OF THE INVENTION

As a solution to one or several of the problems that has been presented with the prior art above, an industrial truck according to claim 1 is proposed.

With pretension mounting an extensive simplification of the attachment of the hydraulic hose is achieved by allowing certain mobility between the hydraulic hose unit and the connecting element with few contained components. Leakage points are avoided as the number of components is diminished. This gives a particularly simple mounting of the hydraulic hose device. You also obtain a god connecting between the hydraulic hose unit and the connecting element.

The hydraulic hose device of the industrial truck can further comprise an indentation in the coupling element is designed with a waist surrounded by protrusions constituting stops for an attached hydraulic hose unit's movement on the coupling element. With this design a simple connecting of the hydraulic hose unit is made possible.

The hydraulic hose device of the industrial truck can further comprise a closing element for closing of the nip between the forks on the connecting element such that securing of the hydraulic hose unit can be achieved against movement in the connecting element's fork direction. The closing element adds extra security for the holding of the hydraulic hose unit at the connecting element.

The closing element of the hydraulic hose device of the industrial truck can further be constituted of a detachable clamp. With a clamp a simple closing is achieved.

The hydraulic hose device of the industrial truck can further comprise casings on the outside of the ends of respective hydraulic hose section.

The hydraulic hose device of the industrial truck can further have the casings attached to a first waist on the coupling element.

The hydraulic hose device of the industrial truck, can further have casings that comprise a conic section, wherein the conic section's smaller diameter is positioned adjacent the first waist.

The invention further comprises a method according to claim 8.

With the above mentioned method a faster and simpler progress for the mounting of a hydraulic hose to an industrial truck mast.

### DRAWINGS

Fig. 1: Prior art for pretension mounting of a hydraulic hose in a lift mast for an industrial truck.
Fig. 2: A cross section view of the prior art according to Fig. 1.
Fig. 3: A coupling element according to the invention.
Fig. 4: A connecting element according to the invention.
Fig. 4a A connecting element according to an alternative embodiment of the invention.
Fig 4b: A connecting element according to an alternative embodiment of the invention.
Fig. 5: A closing element according to the invention.
Fig. 6: An hydraulic hose device according to the invention.
Fig. 7: Lift mast with a mounted pretension hydraulic hose.
Fig. 8: Hydraulic hose device according to the invention with casings.
Fig. 9 Hydraulic hose device according to Fig. 8 in a section according to line A - A.

### DETAILED DESCRIPTION OF THE INVENTION

The invention is described by that two hydraulic hose sections is coupled together to an hydraulic hose unit with a coupling element. The hydraulic hose unity is intended to be connected to a connecting element intended to be attached to a lift mast of an industrial truck. To the coupling element the respective hydraulic hose section is provided with a respective casing, also called a press casing.

The coupling element is designed as a tube with a first end and a second end. The coupling element is hollow and tube shaped. When observing from the first end in direction of the second end the coupling element comprises a first section with protrusions, preferably in the form of ribs, a first stop section in the form of a circular protrusion, a waist section, a second circular protrusion, as well as a second section with protrusions, preferably in the form of ribs. The coupling element is press fitted in the first hydraulic hose section and then in the second hydraulic hose section. At press fitting the coupling element is not compressed. The coupling element is preferably made from metal. At press fitting a press casing that surrounds the end of respective hydraulic hose section is first connected.

The ribs are provided for sealing between the coupling element and the hydraulic hose. The ribs can be at least one or any number of choices that is demanded to achieve sealing and retaining. It is preferred that the ribs of one end are of a quantity of five. In connecting to the bevel of the end of the coupling element is preferably a longer extended rib with trapezoidal shape situated. The end section of the coupling element and discloses a wedge shape in the form of a truncated cone. The wedge shape facilitates the press fitting in a known manner. A design without wedge shape is also thinkable. The function of the protrusion sections is both the retaining of respective hydraulic hose section and at the same time sealing of the said hydraulic hose sections. It is thinkable to achieve the same effect by means of other ways known to the person skilled in the art by the use of O-rings or the like.

The stop section for the first half of the coupling element is preferably constituted of two circular protrusions that run around the periphery of the coupling device. The protrusion closest to the ribs has a function to constitute a stop against the first hydraulic hose section. Generally the first stop is called casing lock. On the other side of this protrusion there is a first waist that separates the first circularly shaped stop from the other circularly shaped stop. The second circular stop can have essentially the same diameter as the first, but has preferably a slightly larger diameter to prevent that the press casing enters too far. The second stop has as function to stop the connecting elements movement on a second waist, the main waist, of the coupling element. The first waist is formed between the wall of the first stop that stops the first hydraulic hose section and the wall of the second stop that stops a connecting element's movement in axial direction on the coupling element. The two mentioned walls points in opposite direction. In the first waist a protrusion on the press casing engages. The protrusion of the press casing is generally the end of the press casing with a transversal wall that is situated adjacent the second stop's wall facing the first stop. The second half of the coupling element is designed as the first half but in the reverse order.

The stops above have been described as circularly shaped, in this way is also the first stop designed, to be able to connect against the press casing. For the second stop the shape is not crucial for the function, instead it could have any protruding shape, such as quadratic, hexagonal, or the like. The second stop should house at least partly a circle that is at least a bit larger that the inner diameter of the hydraulic hose, preferably at least as large as the hydraulic hose armament. The shape of the second stop can also be chosen more freely than the first stop and also adapted to the connecting element. For example it is thinkable that the second stop has a shape that is constituted of essentially two protrusions in the same plane, which are intended to enter into contact with the connecting element designed in a complementary manner. In the above the second half of the coupling element has been described. The second half is designed as the first half but in reverse order.

The coupling element can have a shape that is essentially straight in longitudinal direction. It can also have a shape that is bent wherein the first hydraulic hose section forms an angle with the second hydraulic hose section, when mounted together as a hydraulic hose unit.

It shall with the above be understood that the coupling element also can have an asymmetrical design. It can for example be demanded if hydraulic hose dimensions is of different thickness shall be attached to the hydraulic mast. Suitably the coupling element is then adapted to the different hydraulic hose dimensions. Also an adaptation to different press casing dimensions is also being suitably performed. The coupling element is preferably designed as a unit.

The connecting element is designed such that the hydraulic hose stays movable after a connecting to the connecting element and therein has been attached to the lifting mast. The connecting element is suitably designed with two extending forks. The forks are separated with a distance, in the form of a gap that lies in an interval that is larger than the diameter of the main waist of the coupling element but at the same time is smaller than the diameter of the protrusions that constitutes stops surrounding the main waist on the coupling element. The connecting element is intended to be attached to a lifting mast of an industrial truck. For this purpose an attachment section is arranged on the connecting element. The connecting element is preferably designed in a weldable material such as steel, or any other weldable metal. The connecting element can also be designed in another suitable material such as plastic, for example composite plastic. The connecting element is preferably connected to a bulkhead in the lift mast. The attachment is usually performed through welding, but can also be performed with an attachment element such as a screw joint, or the like such as riveting or gluing. This in order to be able to receive the forces in the length direction of the lift mast that appears when holding the hydraulic hose in an essentially vertical position, but also in order to receive the forces that appear above all at pushing movements in the lifting mast at lifting or lowering of the forks of the lifting mast. The forks of the connecting element can lie in the same plane as the attachment section, wherein the connecting element can be designed flat. The attachment section and the forks can also lie in different planes. These planes can for example relate to each other by an angle of about 90 degrees. The forks can also be bent down in an angle from a plane formed by the essentially flat surface in the area before the forks extend from the connecting element. By such design force components running in a plane essentially parallel with the plane formed by the essentially flat surface in the area adjacent where the forks protrudes from the connecting element, can be received. This can for example be forces that are not pointing in the length direction of the mast. The hydraulic hose unit is thereby secured from being able to leave the gap that is formed between the two forks.

The connecting element is in the above described as two protruding forks. This design is not absolute. For example it is thinkable with a design where the forks are asymmetrically designed with a longer fork that is bent in the plane of the attachment section, so that the opening is dislocated transversally in relation to a longitudinal axis of the connecting element. A design with a single fork that has a curved shape and an opening that is positioned in the transversal direction of the connecting element is also thinkable.

The attachment section of the connecting element is preferably designed as a plate that can bear on an essentially horizontal part of a lift mast of an industrial truck. The plate has a suitable extension in transversal and longitudinal direction to allow fixed attachment to the mast. Even if the preferred design is that the plate is in essentially the same plane as the protruding forks, it is also thinkable with a twisted plate that for an essentially vertical attachment. At another attachment type than welding the thickness is adapted to the attachment type, as this is needed to support the forces that arise. If attachment shall be made by means of a screw joint the attachment section is suitably provided with holes. The attachment element is preferably designed as a unit. The forks of the attachment element can be coupled together with a closing element. The closing element can be designed in several ways. According to a preferred design the closing element is designed as a clamp which connects the two forks outer sections to each other. The closing element can also be of another type such as an element attached in a rotatable manner in one fork and that is connected with a locking device to the other fork. It is not suitable that the closing element is attached in a fixed manner for example through welding, as it then becomes difficult or impossible to install the hydraulic hose.

The closing element can be excluded. The connecting element is then suitably designed with forks according to the above bent down form a plane parallel with the attachment section of the connecting element. In an alternative the forks are bent downwards from a plane before the connecting element begins, if the attachment section is twisted in relation to a plane seen perpendicularly to the forks lying next to each other. Of course extra safety can be achieved by combining the closing element with a connecting element with bent forks.

The hydraulic hose unit is slid onto the connecting element such that the forks on the attachment element surround the main waist on the coupling element. At a pretension installation at least one of the forks is bearing on the other stop wherein the hydraulic hose is retained in position, without being completely fixated. Thereby is achieved a simple installation with few comprising parts, and with a satisfactory safety in spite of that the hydraulic hose unit is not completely fixated.

The pretension is achieved through adaptation of the length of the hose to the size of the mast. A shorter hose gives a higher pretension. The pretension is preferably present in the section at the hydraulic hose that runs between the attachment point of the attachment element and the hose attachment to a hydraulic cylinder that lifts the mast. The hose section that runs from the hydraulic hose device up to a group of rollers alternatively one roll and thereafter down to an attachment point in the hydraulic cylinder.

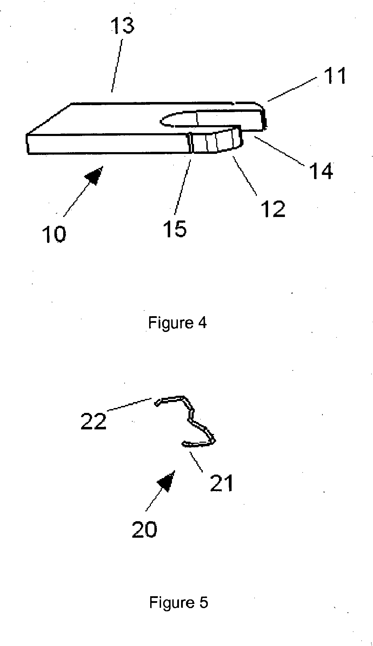

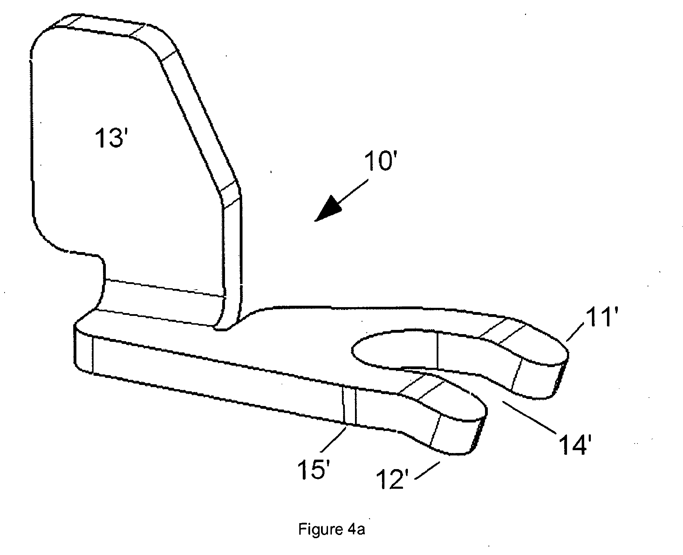

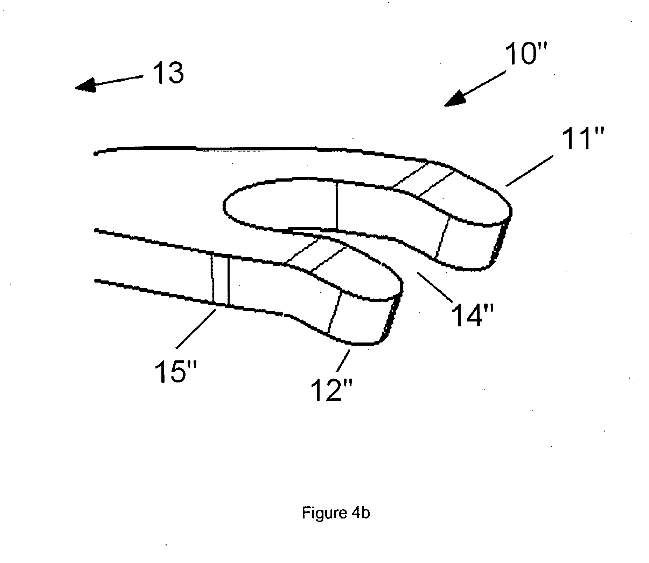

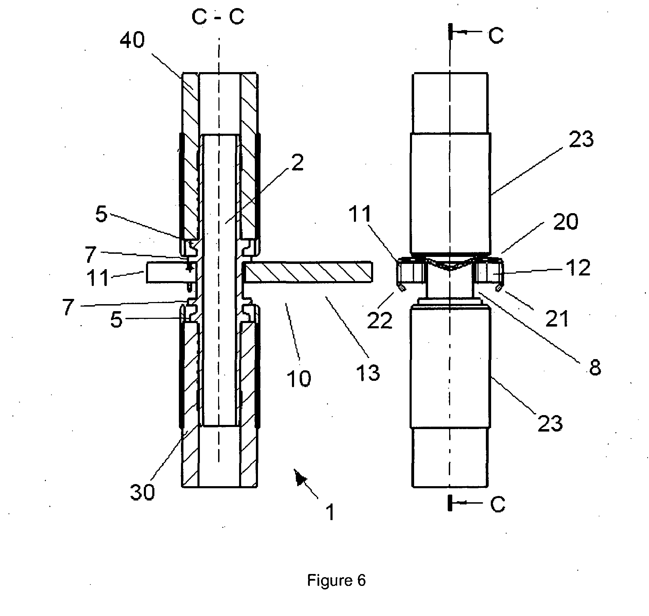

According to a preferred embodiment of the hydraulic hose device shown in figure 3 - 6 is shown in figure 3 the coupling element 2. It is provided with a trapezoidally shaped rib 3 and a group of ribs 4. Further the coupling element 2 comprises a first stop 5 and a first waist 6 and a second stop 7. A second waist 8, the main waist, is positioned centrally on the coupling element 2. In the ends of the coupling element 9 is disclosed a wedge shape in the form of a truncated cone. Figure 4 discloses the connecting element 10, with a first fork 11, and a second fork 12, and a gap 14 there in-between. Further is disclosed a flat attachment section 13 and a groove 15 to engage with a closing element 20. The closing element 20 is disclosed in figure 5. The closing element 20 is constituted of a clamp with two claim ends 21, 22. The clamp end is intended to engage with the grooves 15 that are positioned at a distance from each forks 11, 12 end. At engagement between the closing element 20 and the connecting element 10 the gap 14 is closed between the forks 11, 12. This is disclosed in figure 6 where the closing element 20 is applied between the forks 11, 12 of the connecting element. In figure 6 is also disclosed the first hydraulic hose section 30 and the second hydraulic section 40. Both these respective hydraulic hose sections 30, 40 is bearing on the first stop 5 of the respective half of the symmetrical coupling element 2, which can best be seen in the cross section view C - C of figure 6. In figure 6 is also disclosed a press casing 23 on respective hydraulic hose section 30, 40.

According to a general embodiment the forks of the connecting element are bent downwards, see figure 4b. This embodiment is freely changeable with the embodiment described in figure 3, 4 and 5. This provides for as described earlier that in order for the forks to be able to receive forces in the direction of the forks without risk to the hose exits through the opening. This also provides for that forces that affects the closing element 20 is received by the forks 11" and 12" to a larger extent. The attachment section 13 is not disclosed in figure 4b. The fork design according to figure 4b is not dependent of the design of the attachment section 13 but can be combined freely with any attachment section.

According to another embodiment also combinable with the embodiment according to figure 3, 4 and 5 is disclosed in figure 4a. The attachment element 10' is here being equipped with an attachment section 13' that is arranged at an angle of 90° in relation to the direction of the forks. Through this arrangement, an attachment in vertical direction is provided for in the lift mast 50. This can be an advantage as the angle between the forks and the coupling element can be adjusted, at least with the attachment of the attachment element, for best engagement with the coupling element.

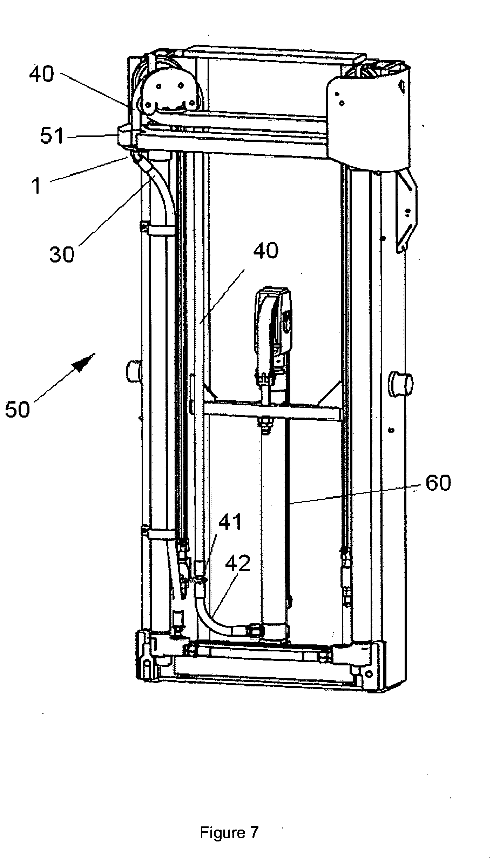

Figure 7 discloses a lifting mast 50 for an industrial truck with an hydraulic hose comprising two sections 30, 40. At the bulkhead passage that is disclosed in the upper part of the lifting mast the hydraulic hose device 1 is situated. The described embodiment shall not be seen as limiting for the invention. Details from the above general detailed description shall be usable to modify the embodiments described above. For example bent forks should be able to be applied, as well as alternative designs of the coupling element and the attachment section of the connecting element. Figure 7 also discloses an hydraulic cylinder 60 and the section 40 of the hose that is exposed to the pretension of the hose. The section 40 is attached at the attachment point 51 and thereafter runs over a group of rollers down to an attachment point 41 in the lower part of the mast 50. Starting from this attachment point, a shorter hydraulic hose section 42 runs to the hydraulic cylinder.

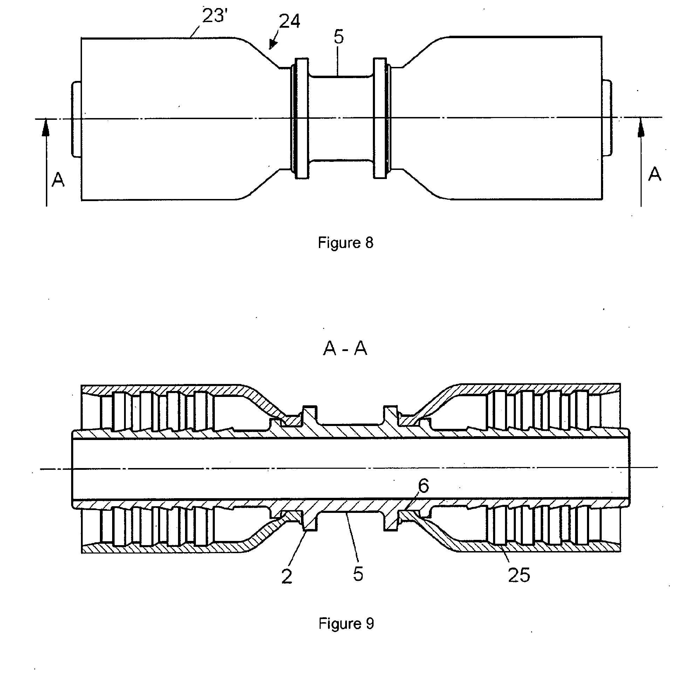

According to still a further embodiment disclosed in figure 8 and 9 can be seen how the coupling element 2 has attached casings 23'. The casings 23' are attached in the first waist 6. The casings 23' comprises a conical section 24 starting with a diameter that provides for that an hydraulic hose is pressed onto the coupling element 2 and a terminating in connecting with the first waist 6. The casings 23' keep the hydraulic hose sections in place and give protection against wear of the connected hydraulic hose section ends. The second waist 5 also becomes as visible in figure 8 and 9 more uncovered. The casings 23' conical section 24 gives an advantageous freedom of movement for the hydraulic hose unit when being connected to a connecting element. The conical section 24 of the casings 23' also give the advantage that respective hydraulic hose section 30, 40 is pressed harder to the coupling element 2 in vicinity of the hydraulic hose section ends 30, 40, which thereby prevents leakage effectively. Also the casings 23' themselves are connected to the coupling element 2 in a sealing manner, which further improves the sealing. The design is of course not limited to figure 8 and 9, it is also of course possible that one hydraulic hose section can have a casing 23' with a conical section 24 and the other hydraulic hose section can be provided with a casing 23 without conical section. The casings 23' are provided with ribbing 25 on the inside to increase engagement with respective hydraulic hose section.

According to a method a hydraulic hose is attached in a pretension manner according to the following steps by:
- providing a first hydraulic hose section
- providing a second hydraulic hose section
- providing a coupling element
- uniting the first and the second hydraulic hose section with said coupling element to a hydraulic hose unit
- providing a connecting element intended to at least partly surround the coupling element
- attaching the coupling element to a lift mast of an industrial truck
- apply the hydraulic hose unit to the connecting element in such a way so the coupling element and the connecting element is connected to each other for an attaching of the hydraulic hose unit pretension on the lift mast of the industrial truck, but that the hydraulic hose unit is at least partly movable in relation to the connecting element.

In this way a good securing of the hydraulic hose in a pretension with few comprised parts and in spite of allowing a certain mobility between the hydraulic hose and the connecting element a good retaining of the pretension hydraulic hose unit is provided for.

The method also comprises a design of a lift mast for an industrial truck with the hydraulic hose device according to the above.

With industrial truck is preferably meant a forklift truck. More preferably a forklift truck for indoor use is meant, a so called warehouse truck. Even more précised is meant an electric warehouse truck. An even more précised is meant a warehouse truck with support legs, a so called support leg truck and comprising a lift mast. The device and method are particularly well suitable for the types of industrial fork lift trucks that are used inside close to warehouse shelves walls and narrow spaces where a loosening hydraulic hose can have serious consequences with hooking in problems and destroyed goods.

## Claims

1. An industrial truck with a lift mast (50) comprising a hydraulic hose device (1) which comprises
- a first hydraulic hose section (30)
- a second hydraulic hose section (40)
- a coupling element (2)
wherein said coupling element (2) is arranged to seal the first hydraulic hose section (30) against hydraulic liquid leakage, to seal the second hydraulic hose section (40) against hydraulic liquid leakage, and to unite said first hydraulic hose section (30) and said second hydraulic hose section (40) to form a hydraulic hose unit,
wherein said coupling element (2) comprises an indentation (8) in which a connecting element (10) can connect at least in a partly mobile manner, wherein the connecting element (10) is arranged such that it can be attached to the lift mast (50) of the industrial truck, and
wherein at connecting between the coupling element (2) and the connecting element (10) attached to the lift mast (50), the hydraulic hose device (1) is attached to the lift mast (50) in such a manner that force components in the longitudinal direction of the mast can be received by the hydraulic hose device (1), together with that the hydraulic hose unit remains at least partly mobile in relation to the connecting element (10),
further comprising the connecting element to and **characterized in that** the connecting element (10) is designed with two forks (11, 12) and that the hydraulic hose unit via stops on the coupling element (2) is secured from leaving the connecting element's (10) nip in all directions, except for a fork direction for the connecting element (10), the forks (11, 12) being arranged to point in a direction that differs from a plane that runs in a direction in parallel with an essentially flat surface in an area adjacent where the forks (11,12) protrude from the connecting element (10), such that it gives possibility for the connecting element's (10) forks (11, 12) to also receive force components in directions that run in parallel with said plane.

2. An industrial truck according to claim 1, wherein the indentation (8) in the coupling element (2) is designed with a waist surrounded by protrusions (7) constituting the stops for the attached connecting element's movement on the coupling element (2).

3. An industrial truck according to claim 1, wherein the hydraulic unit device (1) comprises a closing element (22) for closing of the nip (14) between the forks (11, 12) on the connecting element (10) such that securing of the hydraulic hose unit can be achieved against movement in the connecting element's (10) fork direction.

4. An industrial truck according to claim 3, wherein the closing element (20) is constituted of a detachable clamp.

5. An industrial truck according to any of the preceding claims, wherein the hydraulic hose device comprises casings (23, 23') on the outside of the ends of respective hydraulic hose section (30, 40).

6. An industrial truck according to claim 5, wherein the casings (23, 23') is attached to a first waist (6) on the coupling element (2).

7. An industrial truck according to claim 5 or 6, wherein the casings (23, 23') comprises a conic section (24), wherein the conic section's smaller diameter is positioned adjacent the first waist (6).

8. A method to achieve the industrial truck of any of the claims 1 to 7, comprising the steps of:
- press fitting the coupling element (2) in the first hydraulic hose section (30) and then in the second hydraulic hose section (40) so as to unite the first and the second hydraulic hose section (30, 40) to form the hydraulic hose unit
- attaching of the connecting element (10) to the lifting mast for the industrial truck
- applying the hydraulic hose unit to the connecting element (10) in such a way that the coupling element (2) and the connecting element (10) are attached to each other for an attachment of the hydraulic hose unit in a pretension manner on the lift mast (50) for the industrial truck, but the hydraulic hose unit is at least partly mobile in relation to the connecting element (10).

## Patentansprüche

1. Flurförderzeug mit einem Hubmast (50) umfassend eine Hydraulikschlauchvorrichtung (1) die umfasst:
- einen ersten Hydraulikschlauchabschnitt (30),
- einen zweiten Hydraulikschlauchabschnitt (40),
- ein Kupplungselement (2),
wobei das Kupplungselement (2) so eingerichtet ist, dass es den ersten Hydraulikschlauchabschnitt (30) gegen Hydraulikflüssigkeitsleckage abdichtet, den zweiten Hydraulikschlauchabschnitt (40) gegen Hydraulikflüssigkeitsleckage abdichtet, und den ersten Hydraulikschlauchabschnitt (30) und den zweiten Hydraulikschlauchabschnitt (40) vereint, um eine Hydraulikschlauchvorrichtung zu formen,
wobei das Kupplungselement (2) eine Vertiefung (8) umfasst, in der ein Verbindungselement (10) zumindest auf eine teilweise mobil Weise angebunden werden kann, wobei das Verbindungselement (10) derart eingerichtet ist, dass es an den Hubmast (50) des Flurförderzeugs befestigt werden kann,
wobei durch Herstellung einer Verbindung zwischen dem Kupplungselement (2) und dem Verbindungselement (10), das an dem Hubmast (50) befestigt ist, die Hydraulikschlauchvorrichtung (19) an den Hubmast (50) in einer solchen Weise befestigt ist, dass Kraftkomponenten in Längsrichtung des Masts durch die Hydraulikschlauchvorrichtung (1) aufgenommen werden können, zusammen damit bleibt die Hydraulikschlauchvorrichtung zumindest teilweise mobil in Bezug auf das Verbindungselement (10),
ferner umfassend das Verbindungselement (10) und **dadurch gekennzeichnet, dass** das Verbindungselement (10) mit zwei Gabeln (11, 12) gestaltet ist, und dass die Hydraulikschlauchvorrichtung über Anschläge an dem Kupplungselement (2) davor gesichert ist, den Spalt der Verbindungselemente (10) in irgendeiner Richtungen zu verlassen, mit Ausnahme einer Gabelrichtung für das Verbindungselement (10), wobei die Gabeln (11, 12) derart angeordnet sind, dass sie in eine Richtung zeigen, die von einer Ebene abweicht, die in einer Richtung verläuft, die parallel zu einer im wesentlichen flachen Oberfläche ist, in einem Bereich, der angrenzend wo die Gabeln (11, 12) aus dem Verbindungselement (10) ragen, sodass für die Gabeln (11, 12) des Verbindungselementes (10) die Möglichkeit geschaffen ist, ebenfalls Kraftkomponenten in Richtungen aufzunehmen, die parallel zu dieser Ebene verlaufen.

2. Flurförderzeug nach Anspruch 1, wobei die Vertiefung (8) in dem Kupplungselement (2) mit einer Einschnürung gestaltet ist, die von Vorsprüngen (7) umgeben ist, die die Anschläge für die Bewegung des befestigten Verbindungselements an dem Kupplungselement (2) bilden.

3. Flurförderzeug nach Anspruch 1, wobei die Hydraulikschlauchvorrichtung (1) ein Schließelement (22) zum Schließen des Spalts (14) zwischen den Gabeln (11, 12) auf dem Verbindungselement (10) umfasst, sodass eine Sicherung der Hydraulikschlaucheinheit gegen eine Bewegung in Richtung der Gabeln des Verbindungselements (20) erreicht werden kann.

4. Flurförderzeug nach Anspruch 3, wobei das Verschlusselement (20) durch eine lösbare Klemme ausgebildet ist.

5. Flurförderzeug nach einem der vorhergehenden Ansprüche, wobei die Hydraulikschlauchvorrichtung Gehäuse (23, 23') an der Außenseite der Enden der jeweiligen Hydraulikschlauchabschnitte (30, 40) umfasst.

6. Flurförderzeug nach Anspruch 5, wobei die Gehäuse (23, 23 ') an einer ersten Einschnürung (6) an dem Kupplungselement (2) befestigt sind.

7. Flurförderzeug nach Anspruch 5 oder 6, wobei die Gehäuse (23, 23 ') einen konischen Abschnitt (24) aufweisen, wobei der kleinere Durchmesser des konischen Abschnitts angrenzend zu der ersten Eischnürung (6) positioniert ist.

8. Verfahren um das Flurförderzeug nach einem der Ansprüche 1 bis 7 zu erzielen, die folgenden Schritte umfassend:
- Pressverbinden des Kupplungselements (2) in dem ersten Hydraulikschlauchabschnitt (30) und dann in dem zweiten Hydraulikschlauchabschnitt (40), sodass der erste und der zweite Hydraulikschlauchabschnitt (30, 40) vereint werden, um die Hydraulikschlauchvorrichtung zu bilden,
- Anbringen des Verbindungselements (10) an dem Hubmast für ein Flurförderzeug,
- Anwenden der Hydraulikschlaucheinheit an dem Verbindungselement (10) derart, dass das Kupplungselement (2) und das Verbindungselement (10) aneinander befestigt sind, für eine Befestigung der Hydraulikschlaucheinheit in einer vorgespannten Weise an dem Hubmasten (50) für das Flurförderzeug, wobei jedoch die Hydraulikschlaucheinheit zumindest teilweise mobil in Bezug auf das Verbindungselement (10) ist.

## Revendications

1. Chariot de manutention doté d'un mât de levage (50) qui comprend un dispositif de tuyau flexible hydraulique (1) qui comprend :
- une première section de tuyau flexible hydraulique (30) ;
- une seconde section de tuyau flexible hydraulique (40) ;
- un élément d'accouplement (2) ;
dans lequel ledit élément d'accouplement (2) est agencé de façon à : sceller la première section de tuyau flexible hydraulique (30) vis-à-vis d'une fuite de liquide hydraulique ; sceller la seconde section de tuyau flexible hydraulique (40) vis-à-vis d'une fuite de liquide hydraulique ; et unir ladite première section de tuyau flexible hydraulique (30) et ladite seconde section de tuyau flexible hydraulique (40) de façon à former une unité de tuyau flexible hydraulique ;
dans lequel ledit élément d'accouplement (2) comprend une indentation (8) dans laquelle un élément de connexion (10) peut se connecter au moins d'une façon en partie mobile, dans lequel l'élément de connexion (10) est agencé de telle sorte qu'il puisse être fixé sur le mât de levage (50) du chariot de manutention ; et
dans lequel, au niveau de la connexion entre l'élément d'accouplement (2) et l'élément de connexion (10) fixé sur le mât de levage (50), le dispositif de tuyau flexible hydraulique (1) est fixé sur le mât de levage (50) de telle manière que les composantes de force dans la direction longitudinale du mât, puissent être reçues par le dispositif de tuyau flexible hydraulique (1), et ainsi que l'unité de tuyau flexible hydraulique demeure, en partie au moins, mobile par rapport à l'élément de connexion (10) ;
comprenant en outre l'élément de connexion (10), et **caractérisé en ce que** l'élément de connexion (10) est conçu avec deux fourches (11, 12), et **en ce que** l'unité de tuyau flexible hydraulique, par l'intermédiaire d'arrêts situés sur l'élément d'accouplement (2), ne peut laisser aucun espace de l'élément de connexion (10) dans toutes les directions, à l'exception d'une direction de fourche de l'élément de connexion (10), les fourches (11, 12) étant agencées de façon à pointer dans une direction qui diffère d'un plan qui se situe dans une direction parallèle à une surface sensiblement plate dans une zone adjacente où les fourches (11, 12) font saillie de l'élément de connexion (10), de façon à fournir aux fourches (11, 12) de l'élément de connexion (10), la possibilité de recevoir également des composantes de force dans des directions qui sont parallèles audit plan.

2. Chariot de manutention selon la revendication 1, dans lequel l'indentation (8) dans l'élément d'accouplement (2), est conçue avec un étranglement entouré par des saillies (7) qui constituent les arrêts d'un déplacement de l'élément de connexion fixé sur l'élément d'accouplement (2).

3. Chariot de manutention selon la revendication 1, dans lequel le dispositif d'unité hydraulique (1) comprend un élément de fermeture (22) destiné à fermer l'espace (14) entre les fourches (11, 12) sur l'élément de connexion (10) de telle sorte que la fixation de l'unité de tuyau flexible hydraulique puisse être réalisée sans déplacement dans la direction de fourche de l'élément de connexion (10).

4. Chariot de manutention selon la revendication 3, dans lequel l'élément de fermeture (20) est constitué par une bride qui peut être détachée.

5. Chariot de manutention selon l'une quelconque des revendications précédentes, dans lequel le dispositif de tuyau flexible hydraulique comprend des enveloppes (23, 23') à l'extérieur des extrémités de la section de tuyau flexible hydraulique respective (30, 40).

6. Chariot de manutention selon la revendication 5, dans lequel les enveloppes (23, 23') sont fixées sur un premier étranglement (6) sur l'élément d'accouplement (2).

7. Chariot de manutention selon la revendication 5 ou la revendication 6, dans lequel les enveloppes (23, 23') comprennent une section conique (24), dans lequel le plus petit diamètre de la section conique est positionné adjacent au premier étranglement (6).

8. Procédé destiné à réaliser le chariot de manutention selon l'une quelconque des revendications 1 à 7, comprenant les étapes consistant à :
- ajuster avec serrage l'élément d'accouplement (2) dans la première section de tuyau flexible hydraulique (30), et ensuite dans la seconde section de tuyau flexible hydraulique (40) de façon à unir les première et seconde sections de tuyau flexible hydraulique (30, 40) de manière à former l'unité de tuyau ;
- fixer l'élément de connexion (10) sur le mât de levage du chariot de manutention ;
- appliquer l'unité de tuyau flexible hydraulique sur l'élément de connexion (10) de telle façon que l'élément d'accouplement (2) et l'élément de connexion (10) soient fixés l'un à l'autre pour une fixation de l'unité de tuyau flexible hydraulique d'une manière tendue au préalable sur le mât de levage (50) du chariot de manutention, mais que l'unité de tuyau flexible hydraulique soit mobile, en partie au moins, par rapport à l'élément de connexion (10).
